(19) Europäisches Patentamt
European Patent Office
Office européen des brevets

(11) **EP 2 416 128 A1**

(12) **EUROPEAN PATENT APPLICATION**

(43) Date of publication:
**08.02.2012 Bulletin 2012/06**

(51) Int Cl.:
***G01G 11/00*** *(2006.01)*

(21) Application number: **11382271.2**

(22) Date of filing: **04.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.08.2010 AR P100102889**

(71) Applicant: **Balanzas Hook, S.A.
2600 Venado Tuerto - Santa Fe (AR)**

(72) Inventor: **Rossi, Hector Claudio
2600 Venado Tuerto - Santa Fe (AR)**

(74) Representative: **Urizar Anasagasti, Jesus Maria
Paseo de la Castellane 72- 1°
28046 Madrid (ES)**

(54) **A weighing device for an improved bulk material conveyor.**

(57) The present invention relates to a weighing device for an improved bulk material conveyor of the type which includes or connects a conduction and elevation tube for conducting or elevating a continuous flow of bulk material at the outlet the device itself serving as the discharge router and allowing the reading and registering the material weight transferred in real time, as a result of its special configuration or load cells assembly between fixed and movable plates, and relying on the reading of a rotation sensing means registering the revolutions of a reference rotating means rotating with the continuous bulk material flow exiting through the device itself the flow of bulk material being controlled by a baffle plate.

Fig. 1

**Description**

<u>State of the Art of the Invention</u>

<u>Field of the Invention</u>

The present invention relates to the field of the devices, apparatuses and arrangements used in the weighing of bulk material, more specifically, the present invention relates to a weighing device used in a bulk material conveyor and more preferably in a discharge head of elevating tubes for elevating grain seeds and the like, wherein said grain, seed and the like is elevated in a continuous flow manner by means of a piped worm screw mechanism or equivalent mechanism exiting through a diverter outlet continuously.

<u>Description of the Prior Art</u>

For a better understanding of the object and scope of the present invention it is convenient to describe the current state of the art in reference to the devices and weighing practices during the handling of loads in bulk, especially when the loading and discharging thereof is performed continuously. Thus, the varied disadvantages involving the control of loads in bulk of, for example, grains, seeds and similar products coming from the harvest which must be discharged onto containers or trucks for their subsequent transportation or harvested and transported since they are removed from silage bags, will be briefly described.

The handling and transportation of bulk material substantially differs from materials or products which are packaged in certain or measured quantities, such as boxes, bags, and the like is known. For this reason, the verification of the weight or load of bulk material which an agricultural producer supplies to a transportation truck, for example, deserves special care since the insuring of an objective weight measurement generally requires the transfer of said lorries to weighing scales before and after the loading of the grain, seed or the like.

Other resources, such as portable scales, axle load scales and even scales assembled on the recipients, hoppers or containers themselves are also used. To that end, some type of device which would allow weighing the circulating flow which was being transferred in real time was needed. In other words, a dynamic way of weighing is obtained as a result of a device which would allow assembling an elevating and conducting tube for elevating and conducting grains in the discharge outlet itself and allowing taking real time readings of the weight which was being supplied to the hopper, container or truck receiving said bulk material. In turn, it was required that said device did not substantially modify the operating conditions of the elevating and conducting tube for elevating and conducting bulk material, preventing the generation of transitory loads, and the arrangement of rotating frameworks for temporary containment of grain, or of any type of movable hatch which should be operated interrupting the desired continuous flow. Therefore allowing obtaining an effective weighing dynamic of a continuous circulating flow of bulk material directly in the outlet of the elevating and conducting tube for discharge.

Said dynamic way of weighing has been developed by the present owner in their AR patent application no. P080105405, which through a formula development and/or theory development, successfully combines the reading and record of the weight of bulk material transferred in real time by a configuration or assembly of load cell between fixed and movable plates located at the outlet of the discharge tube, and relying on the reading of a rotation sensing means registering the revolutions of the worm screw, resulting in measuring the mass amount discharged by the weighing device as a result of a harvest processing and storage circuit of said sensor and bucket.

The device of the AR patent application No. P080105405 is very beneficial for the user since the weight of the bulk material can be established when it is discharged by said tube, without the need of counting with a very costly large sized fixed scale. Nevertheless, through continuous development said device for weighing or weighing device of said application was improved, since a loss of material between the vane or the outermost periphery of the helical worm screw and the wall of the conducting tube can be observed by means of constant analysis and tests. This is due to the fact that the size and moisture of the bulk material can vary, i.e, the material slides through said gap this way. For such reason the inventors observed a loss in precision which varies by approximately 10%. Said loss established that the rotation sensing means which takes the speed of the worm screw in the main application could be removed and be arranged in another part of the nozzle, and directly sense the flow of the discharged bulk material reducing the equations used in said patent application N° P080105405 and increasing the precision.

Also, stemming from the constant evaluations of said device, it was observed that the costs and installation risks could be reduced if the device for weighing was completely arranged in the nozzle or head, thus preventing carrying out modifications or adaptability alterations to a bulk material discharging machine.

Said improvements have been developed by the AR patent application No. P090100758 belonging to the same owner, wherein said improvements consist of the fact that said rotation sensing means is close to the discharge outlet of said weighing device and said sensing means are operationally connected to a rotating spool which crosses transversally through said weighing device, said spool being arranged adjacently to said upper plate which defines a channel for the grain flow being discharged and which said spool has a plurality of blades projecting inside said channel maintaining a turning ratio with the grain flow.

Thus, said head improves the reading of the weight of continuous flow of grain crossing through the tube and which said head is also covered in the upper part for improving the flow measurement. Said spool is attached to the shaft of a means of rotating census and maintaining a rotation ratio with respect to the grain or bulk material flow exiting the discharge tube.

Nevertheless, in spite of having the many mentioned advantages, it was observed that in some cases or types of machines the screw which raises the grain to the outlet nozzle reached way beyond the edge of the tube, generating two effects, the first consisted in that the grain is projected in an incorrect direction falling in an uncertain area of the scalepan, leaving that grain longer or shorter time on the pan introducing an error in the measurement, which will depend on the revolutions of the screw. The second effect is related to the generation of a wave from the grain flow, this wave on the scales also generates instabilities in the measurement, inducing the increase of error.

For such reasons it was convenient to have a device which improves the above mentioned devices, as well as to transferred the grain on the scalepan in a compact and uniform way regardless of the revolutions of the elevating screw.

Brief Description of the Invention

It is therefore an object of the present invention to provide a weighing device for a bulk material conveyor, be it a tubular conveyor, screw conveyor, bucket conveyer, belt conveyer, etc., wherein the bulk material is transported and the weighing device is capable of weighing the bulk material while the same is transported, the weighing device being able to be applied to a desired part of said conveyor.

It is also another object of the present invention to provide a weighing device for discharge outlet of bulk material which allows discharging said material in a smooth flowing and continuous manner without major interferences, allowing conducting the fluid vein of grain in a convenient manner by means of the device for weighing itself, wherein said device for weighing is suitable for directing the output of the bulk material.

It is yet another object of the present invention to provide an improved device for weighing to be used in grain discharge tubes of the type used for loading and unloading silo bags, load transporting trucks or the like, wherein said device comprises an adaptable and compact head which can be installed in machinery without need of modifying the same for adapting to said weighing device.

It is also another object of the present invention to provide a weighing device for a bulk material discharge tube which has a weighing scales and a baffle plate in the inlet to the scales to "polish" all the grain which is transferred on the scalepan in a compact and uniform manner regardless of the revolutions of a worm screw which raises the grain through the tube.

It is yet another object of the present invention to provide a weighing device for an improved bulk material conveyor operationally connected with an electronic circuit with data processing capacity and means for sampling the information, wherein said device comprises:

a lower plate in fixed position with respect to said bulk material conveyor,
a movable upper plate above which flows a continuous flow of bulk material,
at least one load cell connected by one of its ends to said lower plate and at another of its ends to said upper movable plate,
a sensing means operationally connected to a reference rotating means in contact with said continuous flow of bulk material, wherein said electronic circuit is in operational connection with said at least one load cell and with said sensing means of said reference rotating means, and a baffle plate which has an upper edge articulated to a rotational geometric shaft and a lower edge close to the upper movable plate.

Brief Description of the Drawings

For greater clarity and understanding of the object of the present invention, the same has been illustrated in several drawings in which the invention has been represented in a prefered embodiment all by way of example, wherein:

Figure 1 is a perspective view according to the prior art of the present invention wherein the upper end of a discharge pipe of bulk material with constant flow is observed and wherein a grain elevating worm screw is illustrated, likewise a plurality of particles representing the flow of grain through the worm screw and exiting the weighing device is seen;
Figure 2 is a side and cross section view of the device for weighing of Figure 1, wherein said device assembled on the outlet of a bulk material elevating tube is observed, in addition an electronic circuit contained in a generic device with keys and a screen is referred to in a generic manner;

Figure 3 is a perspective view of the upper end of a grain elevator of a device for weighing of the prior art wherein a variation in the design of the upper movable plate is ilustrated, allowing the reference rotating means to adopt the form illustrated in Figure 4, i.e, radiant rotating paddles;

Figure 4 is a cross sectional side view of the device of Figure 3, now also illustrating the radiant rotating paddles with the capacity of acting as reference rotating means;

Figure 5 is a cross section perspective view of another device for weighing of the prior art wherein a complete cross section of the grain discharge head is observed and a spool and a load cell are also seen;

Figure 6 is a plan view taken from above the device for weighing of Figure 5 wherein said spool and the same crossing through respective side plates of said device is observed, the rotation sensing means connected to the electronic circuit is also seen;

Figure 7 is a cross section perspective view according to the present invention, wherein the addition of a baffle plate which is shown in resting position, arranged between the two side plates of the head is observed;

Figure 8 is a cross section side view according to the present invention wherein said baffle plate in resting position assembled in an oscillating manner on a shaft under the load of a spring of torsion type is observed, and

Figure 9 is a cross section perspective view of the device for weighing of the present invention wherein said baffle plate assembled on a shaft and a torsion spring arranged on said shaft is observed.

Description of the Prior Art

As has been mentioned in the prior art, the weighing of a product in bulk G, exiting with a certain speed through the outlet of a conducting and elevating pipe 1 of, for example, an agricultural machine for grain harvesting in silage bags, is made difficult since said measurement by itself forms a dynamic process. Although the measurement of weight of a continuous flow of grain G is a very attractive and convenient way of measurement due to the comfort and speed of work, on the other hand it forms a significant and problematic technological challenge.

Since it is a dynamic process, variables which are more difficult to understand intervene with respect to a static weighing activity, such as what happens in conventional scales.

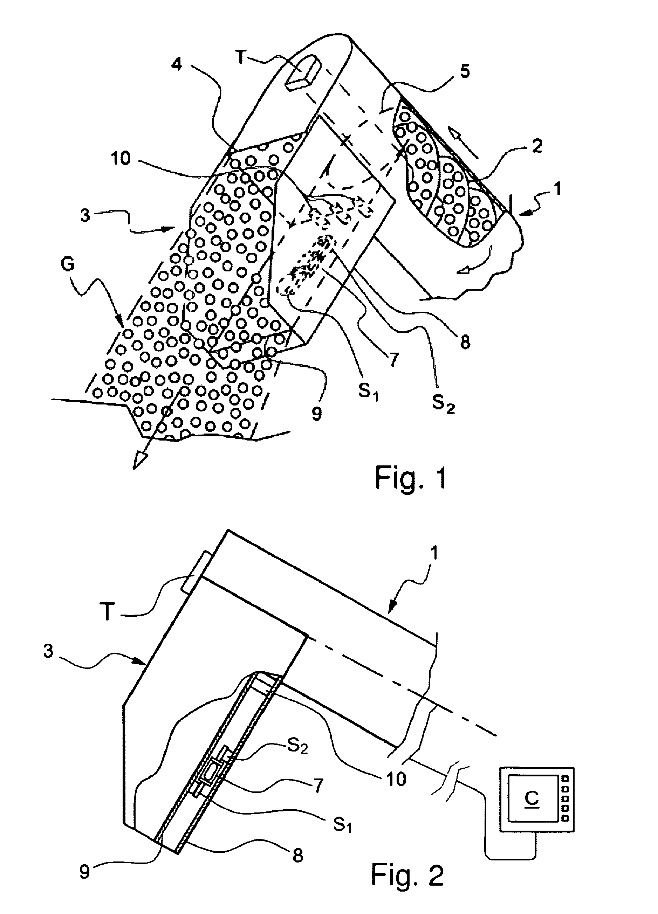

For such reason and with the purpose of theoretically supporting and contributing to the understanding of the correct operation of the weighing device of the present invention, not only Figures 1 to 6 belonging to the already mentioned prior art but rather a theoretical development is also expressed in formulas corresponding with the inventive concepts of the present invention, allowing a person skilled in the art to interpret and to carry out the device for weighing and its appropriate calibration into practice effectively, will be described and attached below. Even when a reference is made to the application of the present device in a tubular screw conveyor, it is worth clarifying that the same can be equally applied in other types of bulk material conveyers such as belt conveyers, strap conveyers, bucket conveyers, etc.

Before beginning with the detailed description of the present invention, reference to patent application No. P080105405 and, in addition to that, patent application No. P090101074 which have been illustrated by means of Figures 1 to 6 will be made. Therefore, said applications will be detailed in recurrent and concise manner to understand the improvements of the present invention. It must be highlighted that the numbers and letters used as references in Figures 1 to 6 of the above applications are from 1 to 24 and C, G, $S_1$, $S_2$ and T while the present invention will be described with reference numbers from 25 onwards.

Description of Patent Application No. P080105405

According to Figures 1 and 2, the discharge tube 1 ilustrated from the upper part of an equipment for elevating and discharging grain comprising a conducting pipe 1, through the inside of which the bulk material G is raised, particularly conducted by a worm screw 2, is observed. A head or weighing device 3 is also in the upper part of said tube 1, it has a base or a lower plate 8 fixed with respect to said tube 1. Said fixed lower plate 8 is positioned away with respect to a movable upper plate 9, generally at distance sufficient for housing a load cell 7 and a plurality of spacers 10 which helps to maintain the distance between plates 8 and 9 but do not interfere with the movement of the upper movable plate 9. When referring to the fixed lower plate it should be understood that this plate can be added to or can be the base of the device or tubular frame forming part of the same or being added to the same by any known fixing means.

Said load cell 7 has a first end attached to said fixed lower plate 8 and its second end attached to said upper movable plate 9 as is illustrated in Figures 1 and 2 of the prior art.

Said load cell 7 is connected to a decoder or electronic circuit C, and by means of said operating connection a signal proportional to the weight resting on the plate is established. It also allows capturing the reading of the revolutions per minute, passes per second or rotation speed of a reference rotating means 2 or equivalent, among others, through a sensor or transducer T.

Theoretical support for the operation and calibration of the device of patent application no. P080105405.

As has been mentioned above, due to the dynamic nature of the weighing required and that the load can not be supported in a static manner on any type of traditional scales, it is necessary to secure the assembly and calibration of a weighing device 3 such that it allows registering the weight of the circulating material to then be able to determine the total weight of material G which has been transferred by means of the grain elevating equipment.

Initially, the instantaneous mass volume which passes through the outlet section 5 and then through the outlet 4 of the tube 1 is calculated.

To calculate in a differential manner, said mass volume is then taken as a differential expression, obtaining:

$$qm = \frac{dm}{dt} \quad \text{(formula 1)}$$

Wherein;
m = mass (kg)
t = time (s)
$q_m$ = mass flow of grain (Kg/s)

Likewise, the vein of moving grain G will have a speed of exit through said outlet 4 which is given by:

$$v_{grain} = \frac{dl}{dt} \quad \text{(formula 2)}$$

Wherein;
$V_{grain}$ = speed of the grain (m/s)
l = travelled length (m)
t = time (s)

From the combination of (formula 1) and (formula 2) a replacement of variables is obtained as follows:

$$qm = \frac{V_{grain}.dm}{dl} \quad \text{(formula 3)}$$

The flow is thus defined in function of the speed of the grain flow "$V_{grain}$", the expression of said "$V_{grain}$" is then obtained.

By taking into consideration that the device 3 will work with an inclination of upper plate 9 of 60°, for example, a component of speed caused by the fall itself on an inclined plane will be produced.

On the other hand, there is a proper exit speed exists due to driving means of said grain, it is worth stating that the speed granted by the worm screw (2) itself or equivalent driving means. Likewise, although a worm screw 2 has been ilustrated and described as elevating and driving means for elevating and driving grain G, other elevating and driving means can be used without this being inconvenient, provided that a continuous flow of grains G emerges through the outlet 4 and through the device of the first embodiment 3.

Component of speed of the grain due to gravity

Generally the device 3 adopts an inclination of outlet of grain G of approximately 60° with respect to the horizontal, a partial component of the total speed of exit of the grain "$V_{grain}$" will correspond with a falling speed through an inclined plane due to the gravity acting on the grain G, so the following formula of the fall through an inclined plane is considered:

$$g.\sin 30°.\delta m = \delta m.V_{grain} + \mu.g.\cos 30°.\delta m$$

*Wherein;*
*g = acceleration of gravity (m/s$^2$)*
*$\delta m$ = is the differential mass of the grain (Kg)*
*v = is the speed which that mass reaches*
*$\mu$ = is the dynamic friction coefficient*
Likewise it is assumed, without introducing significant discrepancies and in a manner verifiable in practice, that factors such as viscosity do not come into play and are negligible with respect to the other magnitudes.
Clarifying the variable "$V_{grain}$":

$$V_{grain} = g.\sin 30°.(1 - \frac{\mu}{\tan 30°}) \qquad \text{(formula 4)}$$

By integrating (formula 4) a new expression of the formula is obtained:

$$V_{grain} = g.\sin 30°.(1 - \frac{\mu}{\tan 30°}).t + V_0$$

$$V_{grain} = k.t + V_0 \qquad \text{(formula 4)}$$

*Wherein;*
*k = calibration constant*
*t = time of the fall of the grain on the ramp (s)*

Component of speed of the grain due to elevating and driving means of the grain

Now, calculating the initial driving speed of the grain "$V_0$" solely due to the action of the extractor screw 2. This speed is given by:

$$V_0 = k.p.f \qquad \text{(formula 5)}$$

*Wherein;*
*p = channel of the screw (m) or (mm) according to dimensional units used in formula;*
*f = the frequency of turn taken from the turn or speed transducer, for example (Hz) and/or a convenient unit such as (rpm); and*
*k = constant of area adjustment to contemplate the area difference between the outlet 5 of the screw and the area of the resulting vein of grain G passing through the weighing means.*
It is therefore taken into account that the speed of the vein flow of grain G is proportional to the speed of output through section 5 of the outlet of the extraction tube 1. From the combination of (formula 4) and (formula 5) the following is obtained.

$$V_{grain} = k_1.p.f + k_2 t \qquad \text{(formula 6)}$$

*Wherein:*
*p = channel of the screw (m) or (mm) according to the other measuring units*
*f = the number of revolutions per unit of time (Hz) or (rpm), etc*
*$k_1$ and $k_2$ = calibration adjustment parameters.*
By integrating (formula 6) in function of time "$t$", the travelled distance "d" is obtained:

$$d = k_1.p.f.t + \frac{k_2}{2}t^2 \qquad \text{(formula 7)}$$

The mean travel time of the grain G will be obtained by clarifying the time "$t$" of (formula 7) taking "$d$" as "$\Delta l$" of the weighing area, i.e., the length of weighing of the upper movable plate 9, and dividing by two, the following is obtained:

$$t_{mean} = F(f) \qquad \text{(formula 8)}$$

It is observed that "$t_{mean}$" only depends on "$f$" as a variable, it is being observed that the speed "$V_{grain}$" will also depend only on "$f$". Therefore "$f$" being a measurable value for example in (rpm), the same can be interpreted by an electronic circuit C through the reception of a periodic pulse signal, whereby multiples or dividers of said periodic pulse signal can also be read and interpreted provided that they relate to the grain volumes G, as does for example by the worm screw 2, for such reason said worm screw 2, particularly for the embodiment of Figures 1 and 2 will act as reference rotating means since its turn frequency relates to the circulating flow. Thus and as will be explained in more detail below, any reference rotating means 2, 11, which allows by means of a transducer T, for example, to be censused or read by an electronic circuit C for determining its rotation frequency could be used for the purpose of the first application without drawbacks. Particularly, and only for illustration purposes, a generic transducer with the capability of reading the rotation speed or number of revolutions of the worm screw 2 is indicated with the reference T. It will therefore be understood that any rotation sensing means T of this reference rotating means could be used for the purpose of the first application.
Subsequently, the mean speed of the grain G is approximated by means of using a Taylor polynomial is and the following is obtained:

$$V_{grain} = C_0 + C_1.f + C_2.f^2 \qquad \text{(formula 9)}$$

(formula 9) is then replaced into formula 3 obtaining the following equivalent therefore reflected in (formula 10):

$$q_m = C_0 \frac{dm}{dl} + C_1 \cdot f \frac{dm}{dl} + C_2 \cdot f^2 \frac{dm}{dl} \quad \cong \quad C_0 \frac{\Delta m_{plate}}{\Delta l_{plate}} + C_1 \cdot f \frac{\Delta mplate}{\Delta l_{plate}} + C_2 \cdot f^2 \frac{\Delta m_{plate}}{\Delta l_{plate}}$$

*Wherein :*
*"$\Delta m_{plate}$" = The weight during a reading of A/D (Analogue/Digital); and*
*"$\Delta l_{plate}$" = Useful length of the plate for weighing 9, wherein the plate for weighing 9 is the plate which contacts the grain G during the exit thereof as it passes through device 3.*
This is perfectly valid when the volume is maintained approximately constant while the flow runs "$\Delta l_{plate}$", a condition which is established perfectly in real life by maintaining the rotation of the screw 2 or driving means during its continuous work cycle or under a work regime.
Formula [10] is used to integrate the same in function of the start time "$T_0$" and end time "$T_f$". The total mass calculation is obtained:

$$M = \int_{T_0}^{T_f} C_0 \frac{dm}{dl} + C_1.f \frac{dm}{dl} + C_2.f^2 \frac{dm}{dl} \, dt \qquad \text{(formula 11)}$$

*Wherein;*
*M = Total mass discharged (Kg).*
*"$dm_{plate}$" = mass differential during an A/D conversion ; and*

"$dl_{plate}$" = length differential of the plate for weighing 6.

Therefore by replacing the integral of (formula 11) with a discrete sum, the following is obtained:

$$M_{sup} = \sum{}^2_{n=0} \frac{C_n}{\Delta l_{Scales}} \cdot \sum{}_{i=0} f(t_i)^n . \Delta m_{Scales}(t_i). \Delta t \qquad \text{(formula 12)}$$

$$M_{inf} = \sum{}^2_{n=0} \frac{Cn}{\Delta l_{Scales}} \cdot \sum{}_{i=0} f(t_{i-1})^n . \Delta m_{Scales}(t_{i-1}). \Delta t \qquad \text{(formula 13)}$$

Wherein:

$M_{sup}$ = Maximum value (highest) of the mass

$M_{inf}$ = Minimum value (lowest) of the mass

For the purpose of sufficiently minimizing the discrepancy or truncating error by the discrete sum the semisum is taken:

$$\text{(formula 14)}$$

$$M = \sum{}^2_{n=0} \frac{C_n . \Delta t}{2 . \Delta l_{Scales}} \cdot \sum{}_{i=0} f(t_i)^n . \Delta m_{Scales}(t_i) + f(t_{i-1})^n . \Delta m_{Scales}(t_{i-1})$$

And by correlating the constants as equivalents of the mentioned calibration constants, the following is obtained:

$$\text{(formula 15)}$$

$$M = \sum{}^2_{n=0} k_n . \sum{}_{i=0} f(t_i)^n . \Delta m_{Scales}(t_i) + f(t_{i-1})^n . \Delta m_{Scales}(t_{i-1})$$

Wherein:

$k_n$ = three calibration constants adjustable at the time of calibration of the device;

$f$ = the reading in (rpm) of the revolutions per minute sensor installed in the screw 2; and

$\Delta m$ - The reading of the load cells 7 for each A/D conversion of the equipment at the time of measuring "i".

It is therefore observed that this theory development not only supports the main application in a convenient manner, rather in practice it has demonstrated to fit in a surprising manner exactly with the measurements and weighing of grain G. Thus the obtaining of readings made in device 3 of the grain G circulating continuously on the upper movable plate 9 allow obtaining the measurement of the total mass of discharged grain G .

The calibration of device 3 is performed by discharging three different mass amounts of grain G through device 3. If "$S_{mn}$" is each of the summations and "$M_m$" the target values actually measured in each of the discharging calibration and wherein the subindex "m" indicates the weighing calibration number, it is possible to calibrate device 3 solving the following equations system:

$$\text{(Equations system 16)}$$

$$\begin{pmatrix} S_{00} & S_{01} & S_{02} \\ S_{10} & S_{11} & S_{12} \\ S_{20} & S_{21} & S_{22} \end{pmatrix} \begin{pmatrix} k_0 \\ k_1 \\ k_2 \end{pmatrix} = \begin{pmatrix} M_0 \\ M_1 \\ M_2 \end{pmatrix}$$

<u>Typical working values with an extractor of grain stored in silage bags:</u>

By taking a typical case of a silage bag extractor provided with a worm screw as an example, the frequency or rotation speed of the screw or driving means is $f$ = 320 rpm; the speed of grain output is $v$ = 2 m/s; and the mass flow of grain output is $q_m$ = 50 Kg/s; therefore in a plate of 800 mm in length, there will be a concurrence of approximately 19 kg of grain G on the plate for weighing 9 itself, whereby its is convenient to assemble a plate for weighing (9) with a total weighing value of approximately 30 kg.

Similar calculation reasoning is applicable for determining the capacity of the load cells which must be placed according to the design variables.

<u>Measurement of the total mass after a discharging time</u>

Having provided the convenient supporting theory suficient for its understanding by a person skilled in the art, it is therefore observed that said development intimately relates to the configuration of the device for weighing 3 comprising a movable upper plate 9 attached to a load cell 7 for example through an attachment or supporting means $S_1$, likewise said loading bucket 7 is also attached to the fixed lower plate 8 through its other end by means of another support or attachment $S_2$, for example. Particularly in the illustrated figures, a loading bucket 7 assembly which in a preferred manner is shifted in alignment in reference to the supports $S_1$ and $S_2$ is observed, thus allowing arranging the length of loading bucket 7 in a convenient manner and minimizing the distance between plates at same time of allowing a better deformation work of the loading bucket 7 itself.

Thus, the grain G circulating as a continuous flow above said movable upper plate 9 will have the capacity of contributing weight according to the theoretical deduction developed above, thus allowing applying the calculation deductions to those which have been derived above (formula 15) for the device of the main application. It is worth stating that once the constants have been calibrated, generally known as "$k$", an suitable electronic circuit C will allow capturing the reading of, among others, the revolutions per minute, passes per second or rotation speed of a reference rotating means 2, 10 or equivalent, through a sensor or transducer. The periodic reading of the weight on said movable upper plate 9 will be carried out in a combined manner by means of said at least one load cell 7.

For the particular case of Figures 1 and 2, the reference rotating means could be the worm screw 2 itself since its rotation is directly associated to a determined flow of grain G but any other reference rotating means can be arranged in the device 3 and/or outside it for the purpose of giving a proportional reading to the flow of grain G. It is therefore observed that for the purpose of an example, both the worm screw 2 and another reference rotating means contacting the grain and proportionally rotating the circulating flow can be used for the purposes of the device of the first embodiment.

Therefore, said electronic circuit C after having been adjusted according to the suitable values of constants "$k$", will take the reading of the reference rotating means 2 or 10, or the like and the periodic reading (Analog/Digital) of the load cell 7 itself allowing to calculate and display the total mass of grain G which has been circulated, for example on a screen or on any other type of register.

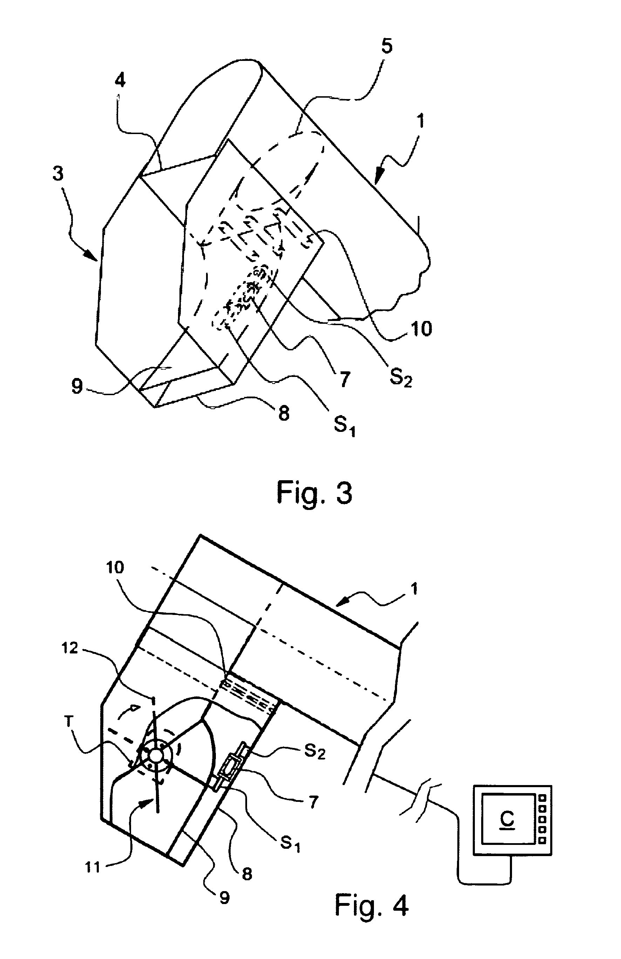

For the purpose of better exemplifying the concept and use of a reference rotating means, Figures 3 and 4 are provided to be explained together with Figures 1 and 2, wherein a reference rotating means 11 which is now made up of means of uniformly distributed paddles 12, wherein the volume between two of said paddles 12 at a determined time is confined accurately in comparison to, for example, the plate 9, said movable upper plate 9 must accompanies the development of the movement of the set of paddles 12 having a curved section in the proximities of the outlet of the tube 1. It is worth stating that said curved section of said movable upper plate 9 is established concentrically to the rotation shaft of said radiant rotating paddles 11 and between the tangential space comprised between two successive paddles 12.

Additionally, another type of reference rotating means can also be incorporated in an equivalent manner and according to that described in the present specification, therefore understanding that a rotation sensor T, revolution sensor, rotation transducer, inductive channel sensor, etc., will therefore allow to electronically communicating the rotation position or the number of revolutions of said reference rotating means 2 or 11 or equivalent to the electronic circuit C electronically.

Said electronic circuit in operative connection with the rotation sensing means T and said load cell 7 of the device 3 will carry out the logic calculation based on the cited theory development and will allow to obtain a reliable and secure reading of the discharged mass amount of bulk material G.

As seen in patent application No. P080105405, a convenient supporting theory sufficient for understanding said application was disclosed, wherein said development relates to the configuration of the device for weighing 3 comprising a movable upper plate 9 attached to said load cell 7 through of a attachment or support means $S_1$, likewise said load cell 7 is also attached to the fixed lower plate 8 through its other end by means of, for example, another support or attachment $S_2$.

Thus, the grain G circulating as a continuous flow above said movable upper plate 9 will have the capacity of contributing weight according to the theory deduction developed in said main patent application, therefore allowing applying the calculation deductions to those which have been derived in (formula 15) which will be described in application No. P090101074

For such reason, worm screw 2 is directly associated to a determined flow of grain G. Therefore, said electronic circuit C after having been adjusted according to the suitable values of the constants referred to in the patent application No. P080100758, will take the reading of the worm screw or rotating means or the like and the periodic reading (Analog/ Digital) of the loading bucket 7 itself allowing calculating and displaying the total mass of grain G which has circulated through said weighing device 3, for example, on a screen or on any other type of register.

Description of patent application no. P090101074 (In addition to patent application no.P080105405)

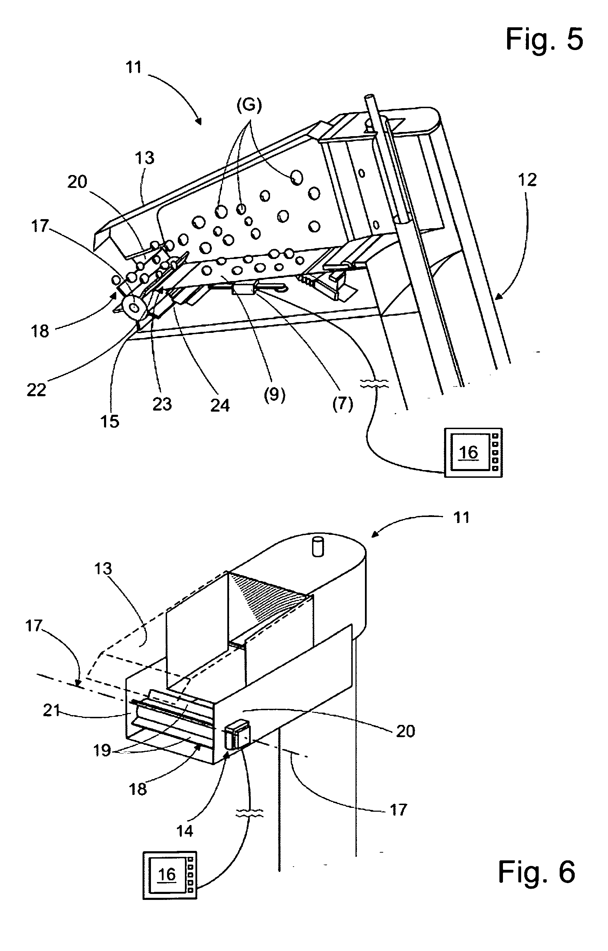

According to the second embodiment which is observed in Figures 5 and 6, a diversion head 11 is connected to a discharge tube 12 which has a not illustrated worm screw, which can be like the one in application No. P080105405. Said head has a plate 13 which covers or closes the head in a way to preferably generate an enclosure protected against wind. Said head 11, for the purposes of this application has been illustrated as the weighing device 11 of application No. P090101074 itself.

As has been mentioned, said weighing device 11 since it is closed with said plate 13, is not interfered by wind when measuring and/or reading said weighing device.

Unlike the main application, which makes reference to the fact that the rotation sensing means is arranged for measuring preferably the revolutions or rotation of the worm screw in the weighing device 11 of application No. P090101074, a rotation sensing means 14 is placed in the part close to the discharge or outlet 15 of the bulk material, resulting in a most actual reading of the speed of the grain and therefore the nullity of one of the terms of formula (15) of the first embodiment. Thus, a new formula that can be applied to the theory development described in the previous application is proposed.

The sensing means 14 which preferably is a rotation transducer is connected to an electronic circuit 16 of similar characteristics and properties as the electronic circuit discussed in the previous application. The rotation sensing means 14 is un turn connected to a shaft 17 of a spool 18. Said spool 18 has blades or vanes 19 and the same are arranged perimetrally around said shaft and are preferably metal, this material not being limiting, rather the present spool could be of a material selected from stainless steels, carbon steels with an anticorrosive coating or from plastic or polymer materials of similar characteristics.

Said spool 18 runs transversely to said weighing device or head 11, wherein one of its ends is assembled in a side plate 20 and the another end to another opposite plate 21 said weighing device 11. Preferably, said spool 18 is arranged on the output end of said upper plate 9 and more preferably is associated with an end 22 of an intermediate panel 23, wherein said intermediate panel 23 has another end 24 directly associated with the upper movable plate 9 discussed in the previous application. It is worth highlighting that the separation space between the intermediate plate and the movable plate or the spool is negligible and it could do without panel 23. In fact an alternative without panel 23 is illustrated in Figure 6.

Improvements in the supporting theory of the operation and calibration of the device of the application P080105405:

In the first embodiment a plurality of formulas are established which calculates the targeted weight and to which no reference will be made, being only necessary to now indicate that the second embodiment modifies the development from formula (15) onwards. Thus, formula 15 of the first embodiment expresses:

$$\text{(formula 15)}$$

$$M = \sum_{n=0}^{2} k_n . \sum_{i=0}^{} f(t_i)^n . \Delta m_{Scales}(t_i) + f(t_{i-1})^n . \Delta m_{Scales}(t_{i-1})$$

The term of order n=2 of equation 15 had been obtained according to the previous embodiment, for taking into account the addition of speed produced by the free fall of the grain. This term would be unnecessary if the speed of the flow can be directly measured on the scales as proposed by the second embodiment.

Therefore, the formula which can be seen below, which is obtained for measuring the speed of grain flow in said weighing device 11 and more precisely measuring the speed of flow which runs through the load cell (7) heading the first embodiment, is added in replacement of (formula 15) of the first embodiment. The formula of the present embodiment is replacement of (formula 15) of the first embodiment, expressed below, wherein:

(Replacement Formula)

$$M = k \sum_{i=0} f(t_i).\Delta m_{Scales}(t_i) + f(t_{i-1}).\Delta m_{Scales}(t_{i-1})$$

Similarly to the previous embodiment, a typical case of a silage bag extractor with worm screw is taken as an example. Thus the frequency or rotation speed of the screw or driving means is $f$ = 320 rpm; the speed of grain output is $v$ = 2 m/s; and the mass flow of grain output is $q_m$ = 50 Kg/s; therefore in a plate of 800 mm in length, there will be a concurrence of approximately 19 kg of grain (G) on the plate for weighing (9) itself, whereby it is convenient to assemble a plate for weighing (9) with a total weighing value of approximately 30 kg.

Measurement of the total mass after an discharging time

The additional patent application uses an alternative rotation means such as the spool 18. In other words, in the main application the rotation means is preferably the worm screw, but the rotation sensing means 14 is arranged in the additional application for sensing the spool 18 which is preferably located at the exit of the outlet 15, whereby the rotation sensing means 14 senses the revolutions, rotations of the spool 18. Said spool rotates when the continuous flow of grain, seeds or the like goes through it. In synthesis, when the bulk material flow expelled by the worm screw (not illustrated) goes through the upper movable plate 9, it defines a longitudinal channel of continuous bulk material flow. Said flow is also improved by the smooth transition between said upper movable plate 9 and said intermediate plate 23, and said channel concludes in a protruding area 25 of the spool 18. Said protruding area, for the purpose of the main application, is an part preferably of the vanes or blades 19. Thus, it is worth highlighting that said spool and said continuous bulk material flow keep a direct turning ratio.

Therefore when the continuous grain flow goes through said weighing device 11, the grain rotates the spool 18 by the expulsion force which is bestowed on the worm screw and the rotation of said spool is sensed by the transducer 14, which takes the rotation speed of the shaft of said spool and transmits the signal to the electronic circuit 16 for storing and processing information. This circuit receives the information from said transducer 14 and the load cell 7 and combines the data placing them in said formula corresponding to the main application to obtain the mass amount which crosses through said weighing device 11, thus achieving the total obtaining of the unloaded or loaded weight in a silage bag or loading truck.

The additional application increases the reading precision of the volume discharged by said weighing device, since in the main application the sensing means, since it is placed for measuring the speed of the screw had a greater percentage of loss of precision, but by arranging said rotation sensing means 14 directly in a spool 19 which measures the rotation speed of the grain flow which is at the exit of the outlet 15 increases said reading precision.

In conclusion, the improvements of application No. P090101074 represent a more reliable and practical development, since both the first and the second application proves the versatility of use as well as the reduction of the time used for weighing and the cost which the later implies. Said costs imply scales of great dimension or size to be able to weigh the lorry carrying the load, the loading and discharging time is increased, i.e., a significant and valuable time for agricultural user. Nevertheless, this problem is aided and solved by the additional application since it has a weighing device for weighing bulk material during unloading/loading. Said device is compact, easy-to-use and has very high utility benefits for the agricultural user, said device is placed in an outlet of an discharge or loading tube for discharging or loading continuous bulk material, said device also contributes in the manner that the loading and discharge machines for loading and discharging bulk material need not be altered or modified.

Although the embodiments of the additional application have demonstrated to being a significant advance in comparison to the weighing devices of the main application, it has been found that in certain conditions the grain behaves in the manner of wave flow which is detrimental to the correct weighing thereof, therefore the inventors have developed improvements forming part of the present invention.

Detailed Description of the Present Invention

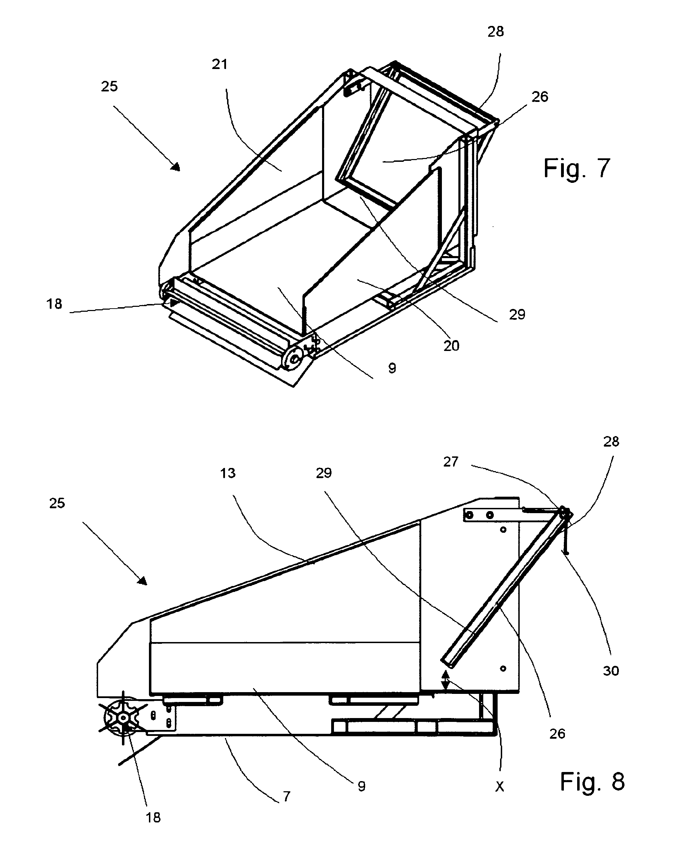

According to Figures 7, 8 and 9 a head 25 which has an upper wall 26 and two side walls 27 which together with the upper movable plate 9 and the fixed lower plate 7 belonging to the main application define an enclosure through where the bulk material flow circulates, is observed. In the same way as was described in the previous applications.

Despite a correct reading of the dynamic weighing which the previous descriptions disclosed, it has been observed in some machines where the weighing device has been installed that the screw which raises the grain to the outlet nozzle reaches way beyond the edge of the tube, generating two effects, the first consists in that the grain is projected in an incorrect direction falling in an uncertain area of the scalepan, leaving that grain longer or shorter time on the pan, introducing an error in the measurement, which will depend on the revolutions of the screw. The second effect is related to the generation of a wave of grain flow, this wave on the scales also generates instabilities in the measurement inducing the increase of error.

Such drawbacks are solved by the present invention, which in turn also transfers the grain onto the scalepan in a compact and uniform manner regardless of the revolutions of the elevator screw.

In Figures 7, 8 and 9 which illustrate the present invention, the same reference numbers of Figures 1 to 6 have been used to indicate the same common parts, using new reference numbers for those new parts forming the present invention.

According to Figures 7, 8 and 9 a weighing device 25 comprising the upper plate 13 and two side plates 20 and 21 which together with the upper movable plate 9 and the fixed lower plate 7 define an enclosure through where grain flow circulates, is observed, as described in the previous applications. To counter the above mentioned drawbacks, the present invention, contrary to the above applications, has a baffle plate 26 assembled in an oscillating manner in a shaft 27 defining a rotational geometric shaft which is parallel to the upper plate 13 and has an end assembled on the side plate 20 and another end assembled on the opposite side plate 21 of said weighing device 25.

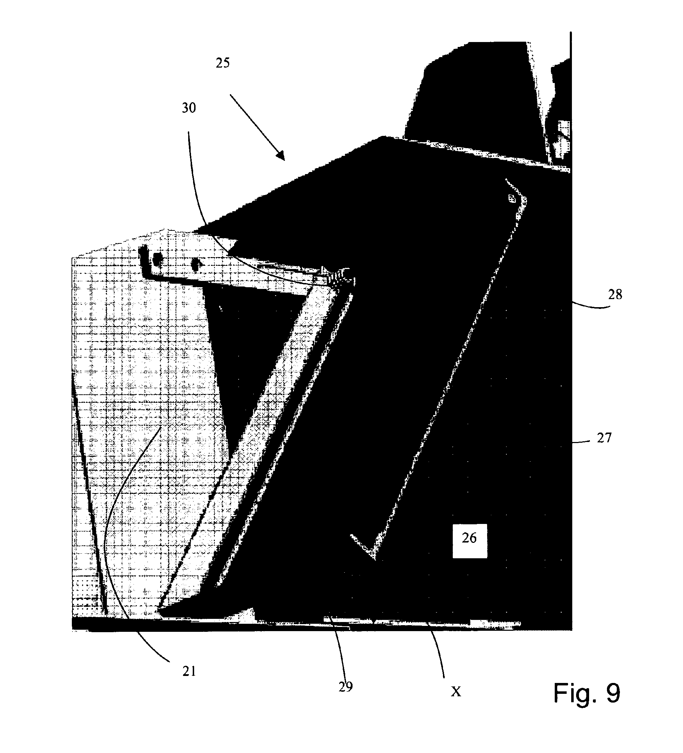

Said baffle plate 26 has an upper edge 28 connected to said shaft 27 in a pivoting or oscillating manner about the same. Between the shaft 27 and the upper edge 28 there is at least one spring 30 or two springs, for example of torsion type, in each end of the shaft, close to the side plate 21 generating a force which leads a lower edge 29 of the baffle plate 26 to stay close to the upper movable plate 9 such that it stays at a height X from said plate 9. Although said shaft 27 is physically represented in Figures 8 and 9 the same can be done without by articulating the ends of the upper edge 28 of the baffle plate, for example by means of protruding bolts, to respective side plates 20 and 21.

As a result of such arrangement of the baffle plate the speed of the bulk material flow in the outlet of the discharge tube not illustrated in Figures 7, 8 and 9 but sufficiently illustrated in Figures 1 to 6 is attenuated, causing all bulk material flow to act in the centre of the upper movable plate 9 in a continuous and constant manner, obtaining a weighing measurement in a much more exact dynamic manner. Said height X will be defined in function of the typology of the bulk material as well as the rotation speed of the worm screw.

It must be made clear that each and every features illustrated in the three embodiments can be combined with one another, for example, the head closed on its upper part of Figures 6 and 8 can be present in the head in the rest of drawings although it is not illustrated therein for clarity purposes.

Having thus especially described and determined the nature of the present invention and a way of how to carry the same into practice, the following is claimed as property and exclusive right:

**Claims**

1. A weighing device for an improved bulk material conveyor operationally connected with an electronic circuit with data processing capacity and means for sampling the information, wherein said device is **characterised in that** it comprises:

   a lower plate in fixed position with respect to said bulk material conveyor,
   a movable upper plate above which circulates a continuous bulk material flow,
   at least one load cell connected by one of its ends to said lower plate and at another of its ends to said movable upper plate,
   a sensing means operationally connected to a reference rotating means in contact with said continuous bulk material flow,
   a baffle plate having an upper edge articulated to a rotational geometric shaft and a lower edge close to the upper movable plate, and

   wherein said electronic circuit is in operational connection with said at least one load cell and with said sensing means of said reference rotating means.

2. The weighing device for an improved bulk material conveyor according to the claim 1, **characterised in that** said rotational geometric shaft of the baffle plate has respective ends assembled on respective side plates one arranged on each side of the upper movable plate.

3. The weighing device for an improved bulk material conveyor according to the claim 2, **characterised in that** it has a spring between said upper edge of the baffle plate and said rotational geometric shaft.

4. The weighing device for an improved bulk material conveyor according to claim 3, **characterised in that** said baffle plate is metal baffle plate.

5. The weighing device for an improved bulk material conveyor according to claim 1, **characterised in that** a conducting and elevating tube for conducting and elevating said continuous bulk material flow is arranged at the outlet and said reference rotating means in contact with said continuous flow of bulk material is selected from the group consisting of a worm screw inside said conduction tube, a plurality of radiant rotating paddles, a rotating spool and combinations thereof.

6. The weighing device for an improved bulk material conveyor according to claim 5, **characterised in that** said rotation sensing means is a rotating transducer operationally connected either to the spool shaft, or to the worm screw shaft, or a shaft of said radiant rotating paddles, or a combination thereof.

7. The weighing device for an improved bulk material conveyor according to any of the previous claims, **characterised in that** between said fixed lower plate and said upper movable plate there is at least one spacer which does not interfere without interference with the weight transferring movement of said upper plate towards said at least said load cell.

8. The weighing device for an improved bulk material conveyor according to any of the previous claims, **characterised in that** the head is closed in its upper part by means of a locking plate.

9. The weighing device for an improved bulk material conveyor according to any of the previous claims, **characterised in that** said upper movable plate has at least one flat section.

10. A weighing device for an improved bulk material conveyor according to any of claims 1 to 8, **characterised in that** said upper movable plate has at least one curved section.

11. A weighing device for an improved bulk material conveyor according to claim 10, **characterised in that** said curved section is established concentrically to the rotation shaft of said radiant rotating paddles and at least between the tangential space comprised between two successive paddles.

12. The weighing device for an improved bulk material conveyor according to claims 1 to 9, **characterised in that** said reference rotating means comprises said rotating spool and is close to the discharge outlet of said weighing device and arranged adjacently to said upper plate defining a channel for the grain flow being discharged, in turn having a plurality of blades projecting inside said channel maintaining a turning ratio with the grain flow.

13. The weighing device for a bulk material conveyor according to claim 12, **characterised in that** said spool has a shaft operationally connected to said rotation sensing means.

14. The weighing device for an improved bulk material conveyor according to claim 13, **characterised in that** said shaft of said spool has an end assembled in a side plate and the other end assembled in an opposite side plate of said weighing device.

15. The weighing device for an improved bulk material conveyor according to claim 14, **characterised in that** said upper plate and said spool are separated by an intermediate plate, wherein said upper plate and intermediate plate define said channel for the grain flow.

16. The weighing device for an improved bulk material conveyor according to claims 12 to 15, **characterised in that** said spool is made of metal material.

Fig. 1

Fig. 2

Fig. 3

Fig. 4

Fig. 5

Fig. 6

Fig. 7

Fig. 8

Fig. 9

**EUROPEAN SEARCH REPORT**

Application Number

EP 11 38 2271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AR 069 672 A1 (BALANZAS HOOK S A [AR]) 10 February 2010 (2010-02-10) * abstract; figure * ----- | 1-16 | INV. G01G11/00 |
| X | AR 071 078 A3 (BALANZAS HOOK S A [AR]) 26 May 2010 (2010-05-26) * abstract; figure * ----- | 1 | |
| A | US 6 441 321 B1 (HEBENSTREIT PAUL [US]) 27 August 2002 (2002-08-27) * abstract; figure 1 * * column 4, line 32 - line 39 * ----- | 1-16 | |
| A | US 5 147 152 A (LINK OTMAR [DE]) 15 September 1992 (1992-09-15) * abstract; figure 2 * * column 4, line 10 - line 58 * * column 7, line 36 - line 40 * ----- | 1-16 | |
| A | US 2008/049546 A1 (O'CALLAGHAN JAMES J [IE] O'CALLAGHAN JAMES JOSEPH [IE]) 28 February 2008 (2008-02-28) * abstract; figures 5,10,11 * * paragraphs [0067], [0074], [0075] * ----- | 1-16 | TECHNICAL FIELDS SEARCHED (IPC) G01G |

The present search report has been drawn up for all claims

| Place of search | Date of completion of the search | Examiner |
|---|---|---|
| The Hague | 4 November 2011 | Pugno, Roberto |

EPO FORM 1503 03.82 (P04C01)

## ANNEX TO THE EUROPEAN SEARCH REPORT
## ON EUROPEAN PATENT APPLICATION NO.

EP 11 38 2271

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2011

| Patent document cited in search report | | Publication date | Patent family member(s) | | Publication date |
|---|---|---|---|---|---|
| AR 069672 | A1 | 10-02-2010 | NONE | | |
| AR 071078 | A3 | 26-05-2010 | NONE | | |
| US 6441321 | B1 | 27-08-2002 | NONE | | |
| US 5147152 | A | 15-09-1992 | DE | 3934910 A1 | 25-04-1991 |
| | | | EP | 0423559 A1 | 24-04-1991 |
| | | | JP | 3138217 A | 12-06-1991 |
| US 2008049546 | A1 | 28-02-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO P080105405 A

- WO P090100758 A